# EUROPEAN PATENT SPECIFICATION

(11) **EP 1 566 934 B1**
(45) Date of publication and mention of the grant of the patent: **20.04.2011**
(21) Application number: 05003404.0
(22) Date of filing: 17.02.2005
(51) Int. Cl.: H04L 27/26, H04B 7/06

(54) **OFDM diversity receiver**
OFDM Diversitätsempfänger
Récepteur à diversité OFDM

(30) Priority: 19.02.2004 JP 2004042950
(43) Date of publication of application: 24.08.2005
(73) Proprietor: ALPS ELECTRIC CO., LTD., Tokyo 145-8501 (JP); MegaChips LSI Solutions Inc., Osaka-shi, Osaka 532-0003 (JP)
(72) Inventor: Oyama, Toru, c/o Alps Electric Co., Ltd., Tokyo 145-8501 (JP); Otaki, Yukio, c/o Alps Electric Co., Ltd., Tokyo 145-8501 (JP); Ishio, Koji, c/o MegaChips LSI Solutions Inc., Osaka-shi Osaka 532-0003 (JP); Chen, Handa, c/o MegaChips LSI Solutions Inc., Osaka-shi Osaka 532-0003 (JP)
(74) Representative: Klunker . Schmitt-Nilson . Hirsch

(56) References cited:
- EP-A- 0 963 086
- WO-A-02/01749
- US-B1- 6 442 222
- Technical Specification of Toshiba TC90A87XBG

## Description

### BACKGROUND OF THE INVENTION

### 1. Field of the Invention

The present invention relates to orthogonal frequency division multiplex (OFDM) diversity receivers that can receive digital terrestrial broadcasting, and in particular, relates to an OFDM diversity receiver that facilitates reception of television broadcasting and mobile reception of broadcasting (for example, a vehicle-mounted broadcasting receiver) with satisfactory reception characteristics.

### 2. Description of the Related Art

Recently, standards of transmission systems of digital terrestrial broadcasting have been developed. The phase of digital terrestrial broadcasting is migrating from a test broadcasting phase to a production broadcasting phase. The required standards of transmission systems of digital terrestrial broadcasting must include, for example, high-definition television broadcasting, mobile reception of broadcasting, efficient use of frequencies by a single frequency network (SFN), and a common system compatible with other media.

In view of these requirements, an OFDM modulation system is adopted as a signal-transmission system of digital terrestrial broadcasting. The OFDM modulation system is resistant to the influence of interfering waves due to, for example, reflected electromagnetic waves and surrounding noise, and enables mobile reception. A typical OFDM modulation system is of a band segmented transmission (BST) type. In the BST type, an overall frequency band is partitioned into segments each having a bandwidth of 432 kHz, and television signals for stationary reception can be transmitted together with data and sound for mobile reception in broadcasting.

High-definition television broadcasting and multichannel television broadcasting use broadband signals having a bandwidth of 5.6 MHz as broadcasting signals. These broadcasting signals are composed of thirteen segments and are received by broadband receivers. When data is transmitted together with sound in broadcasting for mobile reception, narrowband signals having a bandwidth of n × 432 kHz are used as broadcasting signals. These broadcasting signals are composed of n OFDM segments and are received by narrowband receivers, for example, portable receivers. The broadband signals and the narrowband signals share the same segments in the BST-OFDM system. Thus, broadband receivers can also receive narrowband signals, and narrowband receivers can select and receive relevant segments of signals in the middle of thirteen segments of signals.

A known OFDM diversity receiver includes a plurality of receiving antennas, a plurality of tuning units corresponding to respective receiving antennas, and a plurality of semiconductor demodulating circuits corresponding to respective tuning units. Each of the plurality of semiconductor demodulating circuits includes a fast Fourier transformer, a forward error-correcting unit, and a signal-combining unit.

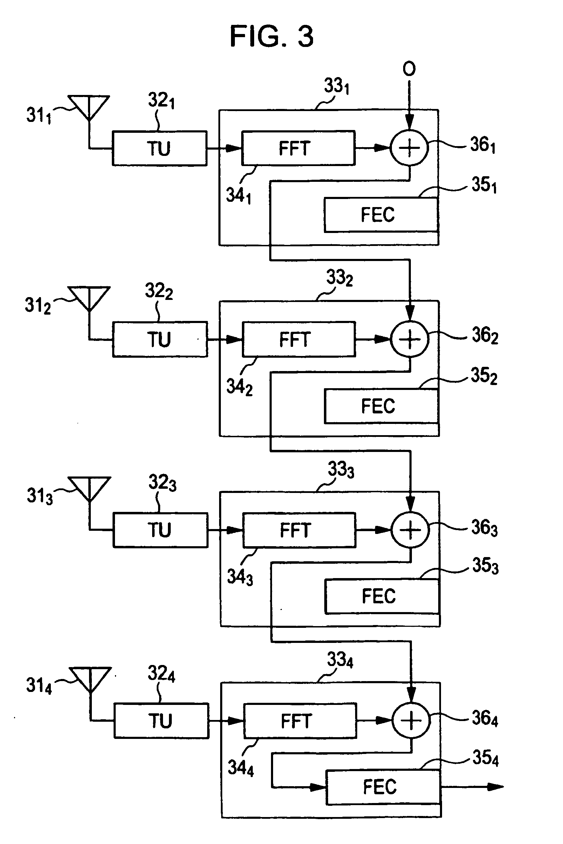

Fig. 3 is a block diagram illustrating a typical structure of a known OFDM diversity receiver.

As shown in Fig. 3, an OFDM diversity receiver, as it is e.g. known from Toshiba's specification TC90A87XBG, includes four receiving antennas 31₁, 31₂, 31₃, and 31₄, four tuning units (TU) 32₁, 32₂, 32₃, and 32₄, and four semiconductor demodulating circuits 33₁, 33₂, 33₃, and 33₄. The semiconductor demodulating circuit 33₁ includes a fast Fourier transformer (FFT) 34₁, a forward error-correcting unit (FEC) 35₁, and a signal-combining unit (+) 36₁₀ The semiconductor demodulating circuit 33₂ includes a fast Fourier transformer (FFT) 34₂, a forward error-correcting unit (FEC) 35₂, and a signal-combining unit (+) 36₂. The semiconductor demodulating circuit 33₃ includes a fast Fourier transformer (FFT) 34₃, a forward error-correcting unit (FEC) 35₃, and a signal-combining unit (+) 36₃. The semiconductor demodulating circuit 33₄ includes a fast Fourier transformer (FFT) 34₄, a forward error-correcting unit (FEC) 35₄, and a signal-combining unit (+) 36₄.

The input terminal of the tuning unit 32₁ is connected to the receiving antenna 31₁. The output terminal of the tuning unit 32₁ is connected to the input terminal of the fast Fourier transformer 34₁ in the semiconductor demodulating circuit 33₁. The input terminal of the tuning unit 32₂ is connected to the receiving antenna 31₂. The output terminal of the tuning unit 32₂ is connected to the input terminal of the fast Fourier transformer 34₂ in the semiconductor demodulating circuit 33₂. The input terminal of the tuning unit 32₃ is connected to the receiving antenna 31₃. The output terminal of the tuning unit 32₃ is connected to the input terminal of the fast Fourier transformer 34₃ in the semiconductor demodulating circuit 33₃. The input terminal of the tuning unit 32₄ is connected to the receiving antenna 31₄. The output terminal of the tuning unit 32₄ is connected to the input terminal of the fast Fourier transformer 34₄ in the semiconductor demodulating circuit 33₄. In the semiconductor demodulating circuit 33₁, the output terminal of the fast Fourier transformer 34₁ is connected to a first input terminal of the signal-combining unit 36₁, a second input terminal of the signal-combining unit 36₁ is connected to a vacant terminal O connected to a ground point, and the output terminal of the signal-combining unit 36₁ is connected to a second input terminal of the signal-combining unit 36₂ in the semiconductor demodulating circuit 33₂. In the semiconductor demodulating circuit 33₂, the output terminal of the fast Fourier transformer 34₂ is connected to a first input terminal of the signal-combining unit 36₂, and the output terminal of the signal-combining unit 36₂ is connected to a second input terminal of the signal-combining unit 36₃ in the semiconductor demodulating circuit 33₃. In the semiconductor demodulating circuit 33₃, the output terminal of the fast Fourier transformer 34₃ is connected to a first input terminal of the signal-combining unit 36₃, and the output terminal of the signal-combining unit 36₃ is connected to a second input terminal of the signal-combining unit 36₄ in the semiconductor demodulating circuit 33₄. In the semiconductor demodulating circuit 33₄, the output terminal of the fast Fourier transformer 34₄ is connected to a first input terminal of the signal-combining unit 36₄, the output terminal of the signal-combining unit 36₄ is connected to the input terminal of the forward error-correcting unit 35₄, and the output terminal of the forward error-correcting unit 35₄ is connected to an end circuit (not shown in the drawing).

The operation of the OFDM diversity receiver having the structure described above is as follows.

The tuning unit 32₁ receives radio signals through the receiving antenna 31₁, converts the received signals to baseband signals, and supplies the converted baseband signals to the semiconductor demodulating circuit 33₁. The tuning unit 32₂ receives radio signals through the receiving antenna 31₂, converts the received signals to baseband signals, and supplies the converted baseband signals to the semiconductor demodulating circuit 33₂. The tuning unit 32₃ receives radio signals through the receiving antenna 31₃, converts the received signals to baseband signals, and supplies the converted baseband signals to the semiconductor demodulating circuit 33₃. Similarly, the tuning unit 32₄ receives radio signals through the receiving antenna 31₄, converts the received signals to baseband signals, and supplies the converted baseband signals to the semiconductor demodulating circuit 33₄.

When the baseband signals are supplied to the semiconductor demodulating circuit 33₁, the fast Fourier transformer 34₁ in the semiconductor demodulating circuit 33₁ transforms the baseband signals using the fast Fourier transformation algorithm and supplies the transformed signals to the semiconductor demodulating circuit 33₂ through the signal-combining unit 36₁. When the baseband signals are supplied to the semiconductor demodulating circuit 33₂, the fast Fourier transformer 34₂ in the semiconductor demodulating circuit 33₂ transforms the baseband signals using the fast Fourier transformation algorithm and supplies the transformed signals to the signal-combining unit 36₂. The signal-combining unit 36₂ combines these transformed signals with the transformed signals supplied from the semiconductor demodulating circuit 33₁ and supplies these combined transformed signals to the semiconductor demodulating circuit 33₃. When the baseband signals are supplied to the semiconductor demodulating circuit 33₃, the fast Fourier transformer 34₃ in the semiconductor demodulating circuit 33₃ transforms the baseband signals using the fast Fourier transformation algorithm and supplies the transformed signals to the signal-combining unit 36₃. The signal-combining unit 36₃ combines these transformed signals with the combined transformed signals supplied from the semiconductor demodulating circuit 33₂ and supplies these combined transformed signals to the semiconductor demodulating circuit 33₄. When the baseband signals are supplied to the semiconductor demodulating circuit 33₄, the fast Fourier transformer 34₄ in the semiconductor demodulating circuit 33₄ transforms the baseband signals using the fast Fourier transformation algorithm and supplies the transformed signals to the signal-combining unit 36₄. The signal-combining unit 36₄ combines these transformed signals with the combined transformed signals supplied from the semiconductor demodulating circuit 33₃ and supplies these combined transformed signals to the forward error-correcting unit 35₄. The forward error-correcting unit 35₄ corrects any errors of the combined transformed signals that are supplied and outputs bit strings to the end circuit through its output terminal.

The OFDM diversity receiver converts the received signals that are received through the receiving antennas 31₁ to 31₄ to the baseband signals, transforms these baseband signals using the fast Fourier transformation algorithm with the fast Fourier transformers 34₁ to 34₄, and combines these transformed signals. Thus, the carrier-to-noise (C/N) ratio of the combined signals can be increased, and the bit error rate after error correction can be decreased.

However, the OFDM diversity receiver includes these four semiconductor demodulating circuits 33₁ to 33₄ respectively including the fast Fourier transformers 34₁ to 34₄, the forward error-correcting units 35₁ to 35₄, and the signal-combining units 36₁ to 36₄. In the matter of utilization of parts of these circuits, for example, only the forward error-correcting unit 35₄ is used among the forward error-correcting units 35₁ to 35₄. In this situation, the circuit size of each of the fast Fourier transformers 34₁ to 34₄ is substantially the same as that of the forward error-correcting units 35₁ to 35₄. Thus, when the forward error-correcting units 35₁ to 35₄ are partially used, packaging efficiency is decreased. Moreover, the length of the signal-receiving path is increased. When the number of signal-combining units 36 increases, the size of an overall package is needlessly increased, thereby hindering size reduction of the OFDM diversity receiver.

### SUMMARY OF THE INVENTION

In view of the known art described above, it is an object of the present invention to provide an OFDM diversity receiver that enables improvement in packaging efficiency by installing only circuits required for the operation of each semiconductor demodulating circuit so that an increase in overall package size is suppressed.

To achieve the object described above, an OFDM diversity receiver according to a first embodiment of the present invention includes a first multi-stage semiconductor demodulating circuit including a first to an n-th circuit stages, each circuit stage including a fast Fourier transformer, a first signal-combining unit, and a second signal-combining unit; and a second single-stage semiconductor demodulating circuit including a fast Fourier transformer and a forward error-correcting unit. Signals received by tuning units are supplied to the respective fast Fourier transformers in the first multi-stage semiconductor demodulating circuit and the second single-stage semiconductor demodulating circuit. Output signals from the fast Fourier transformer in the second circuit stage and output signals from the fast Fourier transformer in the first circuit stage are supplied to the first signal-combining unit in the second circuit stage to be combined. Output signals from the fast Fourier transformer in each of the third to (n-1)-th circuit stages and the combined signals from the signal-combining unit in the preceding circuit stage are supplied to the first signal-combining unit in each of the third to (n-1)-th circuit stages to be combined. Output signals from the fast Fourier transformer in the n-th circuit stage and the combined signals from the signal-combining unit in the preceding circuit stage are supplied to the first signal-combining unit in the n-th circuit stage to be combined. The combined signals in the n-th circuit stage and output signals from the fast Fourier transformer in the second single-stage semiconductor demodulating circuit are supplied to the second signal-combining unit in the n-th circuit stage to be combined. The combined signals from the second signal-combining unit in the n-th circuit stage are supplied to the forward error-correcting unit in the second single-stage semiconductor demodulating circuit. Strings of transmission signals are output from an output terminal of the forward error-correcting unit.

The OFDM diversity receiver according to the first embodiment of the present invention includes the first multi-stage semiconductor demodulating circuit including the circuit stages and the second single-stage semiconductor demodulating circuit. The circuit stages include the fast Fourier transformers, the first signal-combining units, and the second signal-combining units, respectively. The circuit stages do not include any forward error-correcting unit. The second single-stage semiconductor demodulating circuit includes the fast Fourier transformer and the forward error-correcting unit. The circuit stages and the second single-stage semiconductor demodulating circuit are connected to the respective tuning units. In the circuit stages and the second single-stage semiconductor demodulating circuit, baseband signals derived from the signals received by the tuning units are transformed using the fast Fourier transformation algorithm with the fast Fourier transformers and are then combined using the first signal-combining units and the second signal-combining unit to obtain the combined transformed signals. The forward error-correcting unit in the second single-stage semiconductor demodulating circuit corrects any errors of these combined transformed signals. Each of the circuit stages includes no forward error-correcting unit that is unused. Thus, packaging efficiency is improved, and a small OFDM diversity receiver can be achieved by suppressing an increase in overall package size.

To achieve the object described above, an OFDM diversity receiver according to a second embodiment of the present invention includes a first multi-stage semiconductor demodulating circuit including a first to an n-th circuit stages, each circuit stage including a fast Fourier transformer and a signal-combining unit; and a second single-stage semiconductor demodulating circuit including a fast Fourier transformer, a forward error-correcting unit, and a signal-combining unit. Signals received by tuning units are supplied to the respective fast Fourier transformers in the first multi-stage semiconductor demodulating circuit and the second single-stage semiconductor demodulating circuit. Output signals from the fast Fourier transformer in the second circuit stage and output signals from the fast Fourier transformer in the first circuit stage are supplied to the signal-combining unit in the second circuit stage to be combined. Output signals from the fast Fourier transformer in each of the third to n-th circuit stages and the combined signals from the signal-combining unit in the preceding circuit stage are supplied to the signal-combining unit in each of the third to n-th circuit stages to combined. Output signals from the fast Fourier transformer in the second single-stage semiconductor demodulating circuit and the combined signals from the signal-combining unit in the n-th circuit stage are supplied to the signal-combining unit in the second single-stage semiconductor demodulating circuit to be combined. The combined signals from the signal-combining unit in the second single-stage semiconductor demodulating circuit are supplied to the forward error-correcting unit in the second single-stage semiconductor demodulating circuit. Strings of transmission signals are output from an output terminal of the forward error-correcting unit.

The OFDM diversity receiver according to the second embodiment of the present invention includes the first multi-stage semiconductor demodulating circuit including the circuit stages and the second single-stage semiconductor demodulating circuit. The circuit stages include the fast Fourier transformers and the signal-combining units, respectively. The circuit stages do not include any forward error-correcting unit. The second single-stage semiconductor demodulating circuit includes the fast Fourier transformer, the forward error-correcting unit, and the signal-combining unit. The circuit stages and the second single-stage semiconductor demodulating circuit are connected to the respective tuning units. In the circuit stages and the second single-stage semiconductor demodulating circuit, baseband signals derived from the signals received by the tuning units are transformed using the fast Fourier transformation algorithm with the fast Fourier transformers and are then combined using the signal-combining units to obtain the combined transformed signals. The forward error-correcting unit in the second single-stage semiconductor demodulating circuit corrects any errors of these combined transformed signals. Each of the circuit stages includes no forward error-correcting unit that is unused. Thus, as in the first embodiment, packaging efficiency is improved, and a small OFDM diversity receiver can be achieved by suppressing an increase in overall package size.

### BRIEF DESCRIPTION OF THE DRAWINGS

Fig. 1 is a block diagram illustrating a general structure of an OFDM diversity receiver according to an embodiment of the present invention;
Fig. 2 is a block diagram illustrating a general structure of an OFDM diversity receiver according to another embodiment of the present invention; and
Fig. 3 is a block diagram illustrating a typical structure of a known OFDM diversity receiver.

### DESCRIPTION OF THE PREFERRED EMBODIMENTS

Embodiments according to the present invention will now be described with reference to the drawings.

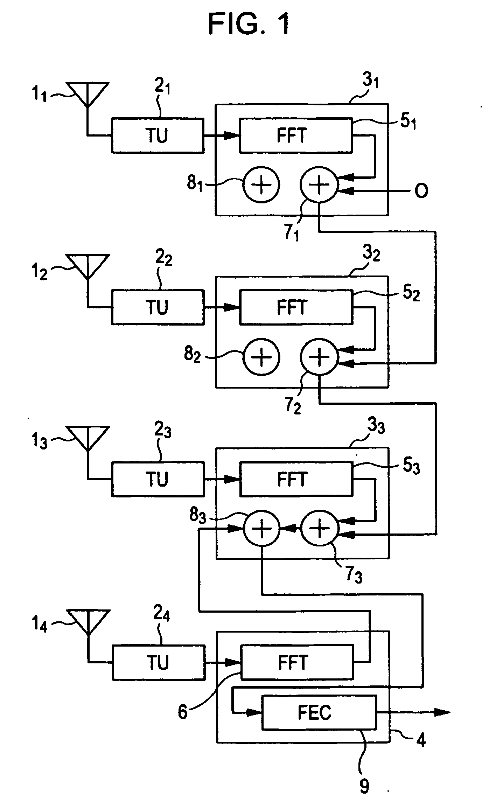

Fig. 1 is a block diagram illustrating a general structure of an OFDM diversity receiver according to an embodiment of the present invention.

As shown in Fig. 1, an OFDM diversity receiver according to this embodiment includes four receiving antennas 1₁, 1₂, 1₃, and 1₄, four tuning units (TU) 2₁, 2₂, 2₃, and 2₄, a first semiconductor demodulating circuit including three circuit stages 3₁, 3₂, and 3₃, and a second semiconductor demodulating circuit 4. The circuit stage 3₁ being the first circuit stage includes a fast Fourier transformer (FFT) 5₁, a first signal-combining unit (+) 7₁, and a second signal-combining unit (+) 8₁. The circuit stage 3₂ being the second circuit stage includes a fast Fourier transformer (FFT) 5₂, a first signal-combining unit (+) 7₂, and a second signal-combining unit (+) 8₂. The circuit stage 3₃ being the third circuit stage includes a fast Fourier transformer (FFT) 5₃, a first signal-combining unit (+) 7₃, and a second signal-combining unit (+) 8₃. The second semiconductor demodulating circuit 4 includes a fast Fourier transformer (FFT) 6 and a forward error-correcting unit (FEC) 9.

The input terminal of the tuning unit 2₁ is connected to the receiving antenna 1₁. The output terminal of the tuning unit 2₁ is connected to the input terminal of the fast Fourier transformer 5₁ in the circuit stage 3₁. The input terminal of the tuning unit 2₂ is connected to the receiving antenna 1₂. The output terminal of the tuning unit 2₂ is connected to the input terminal of the fast Fourier transformer 5₂ in the circuit stage 3₂. The input terminal of the tuning unit 2₃ is connected to the receiving antenna 1₃. The output terminal of the tuning unit 2₃ is connected to the input terminal of the fast Fourier transformer 5₃ in the circuit stage 3₃. The input terminal of the tuning unit 2₄ is connected to the receiving antenna 1₄. The output terminal of the tuning unit 2₄ is connected to the input terminal of the fast Fourier transformer 6 in the second semiconductor demodulating circuit 4.

In the circuit stage 3₁, the output terminal of the fast Fourier transformer 5₁ is connected to a first input terminal of the first signal-combining unit 7₁, a second input terminal of the first signal-combining unit 7₁ is connected to a vacant terminal O connected to a ground point, and the output terminal of the first signal-combining unit 7₁ is connected to a second input terminal of the first signal-combining unit 7₂ in the circuit stage 3₂. In the circuit stage 3₂, the output terminal of the fast Fourier transformer 5₂ is connected to a first input terminal of the first signal-combining unit 7₂, and the output terminal of the first signal-combining unit 7₂ is connected to a second input terminal of the first signal-combining unit 7₃ in the circuit stage 3₃. In the circuit stage 3₃, the output terminal of the fast Fourier transformer 5₃ is connected to a first input terminal of the first signal-combining unit 7₃, the output terminal of the first signal-combining unit 7₃ is connected to a first input terminal of the second signal-combining unit 8₃, a second input terminal of the second signal-combining unit 8₃ is connected to the output terminal of the fast Fourier transformer 6 in the second semiconductor demodulating circuit 4, and the output terminal of the second signal-combining unit 8₃ is connected to the input terminal of the forward error-correcting unit 9 in the second semiconductor demodulating circuit 4. In the second semiconductor demodulating circuit 4, the output terminal of the forward error-correcting unit 9 is connected to an end circuit (not shown in the drawing).

The operation of the OFDM diversity receiver according to this embodiment having the structure described above is as follows.

The tuning unit 2₁ receives radio signals through the receiving antenna 1₁, converts the received signals to baseband signals, and supplies the converted baseband signals to the circuit stage 3₁. The tuning unit 2₂ receives radio signals through the receiving antenna 1₂, converts the received signals to baseband signals, and supplies the converted baseband signals to the circuit stage 3₂. The tuning unit 2₃ receives radio signals through the receiving antenna 1₃, converts the received signals to baseband signals, and supplies the converted baseband signals to the circuit stage 3₃. The tuning unit 2₄ receives radio signals through the receiving antenna 1₄, converts the received signals to baseband signals, and supplies the converted baseband signals to the second semiconductor demodulating circuit 4.

When the tuning unit 2₁ supplies the baseband signals to the circuit stage 3₁, the fast Fourier transformer 5₁ in the circuit stage 3₁ transforms the baseband signals using the fast Fourier transformation algorithm and supplies the transformed signals to the first signal-combining unit 7₂ in the circuit stage 3₂ through the first signal-combining unit 7₁. When the tuning unit 2₂ supplies the baseband signals to the circuit stage 3₂, the fast Fourier transformer 5₂ in the circuit stage 3₂ transforms the baseband signals using the fast Fourier transformation algorithm and supplies the transformed signals to the first signal-combining unit 7₂. The first signal-combining unit 7₂ combines these transformed signals with the transformed signals supplied from the circuit stage 3₁ and supplies these combined transformed signals to the first signal-combining unit 7₃ in the circuit stage 3₃. When the tuning unit 2₃ supplies the baseband signals to the circuit stage 3₃, the fast Fourier transformer 5₃ in the circuit stage 3₃ transforms the baseband signals using the fast Fourier transformation algorithm and supplies the transformed signals to the first signal-combining unit 7₃. The first signal-combining unit 7₃ combines these transformed signals with the combined transformed signals supplied from the circuit stage 3₂ and supplies these combined transformed signals to the second signal-combining unit 8₃. The second signal-combining unit 8₃ combines these combined transformed signals with transformed signals supplied from the fast Fourier transformer 6 in the second semiconductor demodulating circuit 4 and supplies resulted combined transformed signals to the forward error-correcting unit 9 in the second semiconductor demodulating circuit 4. When the tuning unit 2₄ supplies the baseband signals to the second semiconductor demodulating circuit 4, the fast Fourier transformer 6 in the second semiconductor demodulating circuit 4 transforms the baseband signals using the fast Fourier transformation algorithm and supplies the transformed signals to the second signal-combining unit 8₃ in the circuit stage 3₃, as described above. The forward error-correcting unit 9 corrects any errors of the combined transformed signals supplied from the circuit stage 3₃ and outputs bit strings to the end circuit through its output terminal.

As described above, the OFDM diversity receiver according to this embodiment includes the first multi-stage (three-stage) semiconductor demodulating circuit including the circuit stages 3₁ to 3₃ and the second single-stage semiconductor demodulating circuit 4. The circuit stages 3₁ to 3₃ include the fast Fourier transformers 5₁ to 5₃, the first signal-combining units 7₁ to 7₃, and the second signal-combining units 8₁ to 8₃, respectively. The circuit stages 3₁ to 3₃ do not include any forward error-correcting unit. The second single-stage semiconductor demodulating circuit 4 includes the fast Fourier transformer 6 and the forward error-correcting unit 9. The circuit stages 3₁ to 3₃ and the second single-stage semiconductor demodulating circuit 4 are connected to the respective tuning units 2₁ to 2₄. In the circuit stages 3₁ to 3₃ and the second single-stage semiconductor demodulating circuit 4, the baseband signals derived from the signals received by the tuning units 2₁ to 2₄ are transformed using the fast Fourier transformation algorithm with the fast Fourier transformers 5₁ to 5₃ and the fast Fourier transformer 6 and are then combined using the first signal-combining units 7₂ and 7₃ and the second signal-combining unit 8₃ to obtain the combined transformed signals. The forward error-correcting unit 9 in the second single-stage semiconductor demodulating circuit 4 corrects any errors of these combined transformed signals. Each of the circuit stages 3₁ to 3₃ includes no forward error-correcting unit that is unused. Thus, packaging efficiency is improved, and a small OFDM diversity receiver can be achieved by suppressing an increase in overall package size.

Although three circuit stages 3₁ to 3₃ are used in this embodiment, the number of circuit stages is not limited to three and may be a number greater than one, for example, two or four in the present invention. When the number of circuit stages is a number other than three, it is apparent that receiving antennas and tuning units, respectively, as many as the circuit stages have to be installed and connections among components in the circuit stages have to be adjusted according to the number of circuit stages.

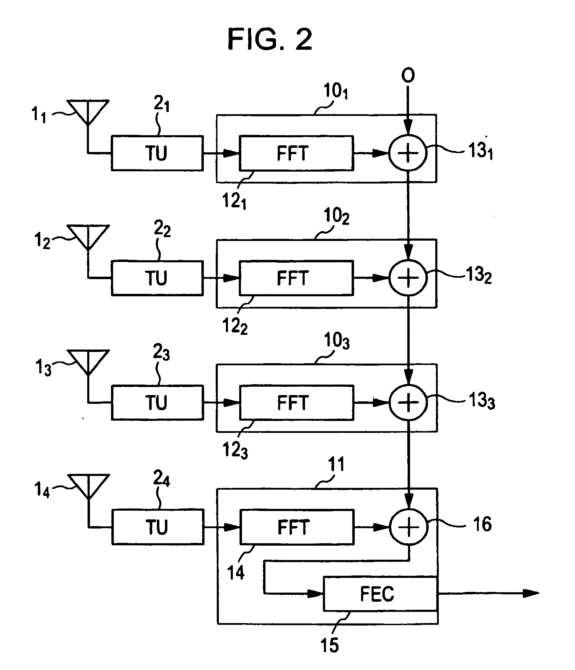

Fig. 2 is a block diagram illustrating a general structure of an OFDM diversity receiver according to another embodiment of the present invention.

As shown in Fig. 2, an OFDM diversity receiver according to this embodiment includes four receiving antennas 1₁, 1₂, 1₃, and 1₄, four tuning units (TU) 2₁, 2₂, 2₃, and 2₄, a first semiconductor demodulating circuit including three circuit stages 10₁, 10₂, and 10₃, and a second semiconductor demodulating circuit 11. The circuit stage 10₁ being the first circuit stage includes a fast Fourier transformer (FFT) 12₁ and a signal-combining unit (+) 13₁. The circuit stage 10₂ being the second circuit stage includes a fast Fourier transformer (FFT) 12₂ and a signal-combining unit (+) 13₂. The circuit stage 10₃ being the third circuit stage includes a fast Fourier transformer (FFT) 12₃ and a signal-combining unit (+) 13₃. The second semiconductor demodulating circuit 11 includes a fast Fourier transformer (FFT) 14, a forward error-correcting unit (FEC) 15, and a signal-combining unit (+) 16.

The input terminal of the tuning unit 2₁ is connected to the receiving antenna 1₁. The output terminal of the tuning unit 2₁ is connected to the input terminal of the fast Fourier transformer 12₁ in the circuit stage 10₁. The input terminal of the tuning unit 2₂ is connected to the receiving antenna 1₂. The output terminal of the tuning unit 2₂ is connected to the input terminal of the fast Fourier transformer 12₂ in the circuit stage 10₂. The input terminal of the tuning unit 2₃ is connected to the receiving antenna 1₃. The output terminal of the tuning unit 2₃ is connected to the input terminal of the fast Fourier transformer 12₃ in the circuit stage 10₃. The input terminal of the tuning unit 2₄ is connected to the receiving antenna 1₄. The output terminal of the tuning unit 2₄ is connected to the input terminal of the fast Fourier transformer 14 in the second semiconductor demodulating circuit 11.

In the circuit stage 10₁, the output terminal of the fast Fourier transformer 12₁ is connected to a first input terminal of the signal-combining unit 13₁, a second input terminal of the signal-combining unit 13₁ is connected to a vacant terminal O connected to a ground point, and the output terminal of the signal-combining unit 13₁ is connected to a second input terminal of the signal-combining unit 13₂ in the circuit stage 10₂. In the circuit stage 10₂, the output terminal of the fast Fourier transformer 12₂ is connected to a first input terminal of the signal-combining unit 13₂, and the output terminal of the signal-combining unit 13₂ is connected to a second input terminal of the signal-combining unit 13₃ in the circuit stage 10₃. In the circuit stage 10₃, the output terminal of the fast Fourier transformer 12₃ is connected to a first input terminal of the signal-combining unit 13₃, and the output terminal of the signal-combining unit 13₃ is connected to a second input terminal of the signal-combining unit 16 in the second semiconductor demodulating circuit 11. In the second semiconductor demodulating circuit 11, the output terminal of the fast Fourier transformer 14 is connected to a first input terminal of the signal-combining unit 16. The output terminal of the signal-combining unit 16 is connected to the input terminal of the forward error-correcting unit 15. The output terminal of the forward error-correcting unit 15 is connected to an end circuit (not shown in the drawing).

The operation of the OFDM diversity receiver according to this embodiment having the structure described above is as follows.

The tuning unit 2₁ receives radio signals through the receiving antenna 1₁, converts the received signals to baseband signals, and supplies the converted baseband signals to the circuit stage 10₁. The tuning unit 2₂ receives radio signals through the receiving antenna 1₂, converts the received signals to baseband signals, and supplies the converted baseband signals to the circuit stage 10₂. The tuning unit 2₃ receives radio signals through the receiving antenna 1₃, converts the received signals to baseband signals, and supplies the converted baseband signals to the circuit stage 10₃. The tuning unit 2₄ receives radio signals through the receiving antenna 1₄, converts the received signals to baseband signals, and supplies the converted baseband signals to the second semiconductor demodulating circuit 11.

When the tuning unit 2₁ supplies the baseband signals to the circuit stage 10₁, the fast Fourier transformer 12₁ in the circuit stage 10₁ transforms the baseband signals using the fast Fourier transformation algorithm and supplies the transformed signals to the signal-combining unit 13₂ in the circuit stage 10₂ through the signal-combining unit 13₁. When the tuning unit 2₂ supplies the baseband signals to the circuit stage 10₂, the fast Fourier transformer 12₂ in the circuit stage 10₂ transforms the baseband signals using the fast Fourier transformation algorithm and supplies the transformed signals to the signal-combining unit 13₂. The signal-combining unit 13₂ combines these transformed signals with the transformed signals supplied from the circuit stage 10₁ and supplies these combined transformed signals to the signal-combining unit 13₃ in the circuit stage 10₃. When the tuning unit 2₃ supplies the baseband signals to the circuit stage 10₃, the fast Fourier transformer 12₃ in the first semiconductor demodulating circuit 10₃ transforms the baseband signals using the fast Fourier transformation algorithm and supplies the transformed signals to the signal-combining unit 13₃. The signal-combining unit 13₃ combines these transformed signals with the combined transformed signals supplied from the circuit stage 10₂ and supplies these combined transformed signals to the signal-combining unit 16 in the second semiconductor demodulating circuit 11. When the tuning unit 2₄ supplies the baseband signals to the second semiconductor demodulating circuit 11, the fast Fourier transformer 14 in the second semiconductor demodulating circuit 11 transforms the baseband signals using the fast Fourier transformation algorithm and supplies the transformed signals to the signal-combining unit 16. The signal-combining unit 16 combines these transformed signals with the combined transformed signals supplied from the circuit stage 10₃ and supplies these combined transformed signals to the forward error-correcting unit 15. The forward error-correcting unit 15 corrects any errors of the combined transformed signals that are supplied and outputs bit strings to the end circuit through its output terminal.

As described above, the OFDM diversity receiver according to this embodiment includes the first multi-stage (three-stage) semiconductor demodulating circuit including the circuit stages 10₁ to 10₃ and the second single-stage semiconductor demodulating circuit 11. The circuit stages 10₁ to 10₃ include the fast Fourier transformers 12₁ to 12₃ and the signal-combining units 13₁ to 13₃, respectively. The circuit stages 10₁ to 10₃ do not include any forward error-correcting unit. The second single-stage semiconductor demodulating circuit 11 includes the fast Fourier transformer 14, the forward error-correcting unit 15, and the signal-combining unit 16. The circuit stages 10₁ to 10₃ and the second single-stage semiconductor demodulating circuit 11 are connected to the respective tuning units 2₁ to 2₄. In the circuit stages 10₁ to 10₃ and the second single-stage semiconductor demodulating circuit 11, the baseband signals derived from the signals received by the tuning units 2₁ to 2₄ are transformed using the fast Fourier transformation algorithm with the fast Fourier transformers 12₁ to 12₃ and the fast Fourier transformer 14 and are then combined using the signal-combining units 13₂ and 13₃ and the signal-combining unit 16 to obtain the combined transformed signals. The forward error-correcting unit 15 in the second single-stage semiconductor demodulating circuit 11 corrects any errors of these combined transformed signals. Each of the circuit stages 10₁ to 10₃ includes no forward error-correcting unit that is unused. Thus, packaging efficiency is improved, and a small OFDM diversity receiver can be achieved by suppressing an increase in overall package size.

Although three circuit stages 10₁ to 10₃ are used in this embodiment, the number of circuit stages is not limited to three and may be a number greater than one, for example, two or four in the present invention. When the number of circuit stages is a number other than three, it is apparent that receiving antennas and tuning units, respectively, as many as the circuit stages have to be installed and connections among components in the circuit stages have to be adjusted according to the number of circuit stages.

## Claims

1. An OFDM diversity receiver comprising:
a first multi-stage semiconductor demodulating circuit including a first to an n-th circuit stages (3₁ - 3₃), each circuit stage including a fast Fourier transformer (5₁ - 5₃), a first signal-combining unit (7₁ - 7₃), and a second signal-combining unit (8₁ - 8₃); and
a second single-stage semiconductor demodulating circuit (4) including a fast Fourier transformer (6) and a forward error-correcting unit (9), wherein
the first multi-stage semiconductor demodulating circuit and second single stage semiconductor demodulating circuit are separate and individual devices;
signals received by tuning units (2₁ - 2₄) are supplied to the respective fast Fourier transformers (5₁ - 5₃,6) in the first multi-stage semiconductor demodulating circuit (3₁- 3₃) and the second single-stage semiconductor demodulating circuit (4);
output signals from the fast Fourier transformer (5₂) in the second circuit stage (3₂) of the first multi-stage semiconductor demodulating circuit and output signals from the fast Fourier transformer (5₁) in the first circuit stage (3₁) of the first multi-stage semiconductor demodulating circuit are supplied to the first signal-combining unit (7₂) in the second circuit stage (3₂) of the first multi-stage semiconductor demodulating circuit to be combined;
output signals from the fast Fourier transformer (5₃) in each of the third to (n-1)-th circuit stages (3₃) of the first multi-stage semiconductor demodulating circuit and the combined signals from the signal-combining unit in the preceding circuit stage (3₂) of the first multi-stage semiconductor demodulating circuit are supplied to the first signal-combining unit (7₃) in each of the third to (n-1)-th circuit stages (3₃) of the first multi-stage semiconductor demodulating circuit be combined;
output signals from the fast Fourier transformer (5₃) in the n-th circuit stage (3₃) of the first multi-stage semiconductor demodulating circuit and the combined signals from the signal-combining unit (7₂) in the preceding circuit stage (3₂) of the first multi-stage semiconductor demodulating circuit are supplied to the first signal-combining unit (7₃) in the n-th circuit stage (3₃) of the first multi-stage semiconductor demodulating circuit to be combined;
the combined signals in the n-th circuit stage (3₃) of the first multi-stage semiconductor demodulating circuit and output signals from the fast Fourier transformer (6) in the second single-stage semiconductor demodulating circuit (4) are supplied to the second signal-combining unit (8₃) in the n-th circuit stage (3₃) to be combined;
the combined signals from the second signal-combining unit (8₃) in the n-th circuit stage (3₃) of the first multi-stage semiconductor demodulating circuit are supplied to the forward error-correcting unit (9) in the second single-stage semiconductor demodulating circuit (4); and
bit strings are output from an output terminal of the forward error-correct-ing unit (9).

2. An OFDM diversity receiver comprising:
a first multi-stage semiconductor demodulating circuit (10, - 10₃) including a first (10₁) to an n-th (10₃) circuit stages, each circuit stage including a fast Fourier transformer (12₁ - 12₄) and a signal-combining unit (13₁ -13₃); and
a second single-stage semiconductor demodulating circuit (11) including a fast Fourier transformer (14), a forward error-correcting unit (15), and a signal-combining unit (16), wherein
the first multi-stage semiconductor demodulating circuit and second single-stage semiconductor demodulating circuit are separate and individual devices;
signals received by tuning units (2₁ - 2₄) are supplied to the respective fast Fourier transformers (12₁ - 12₃, 14) in the first multi-stage semiconductor demodulating circuit (10₁ - 10₃) and the second single-stage semiconductor demodulating circuit (11);
output signals from the fast Fourier transformer (12₂) in the second circuit stage (10₂) of the first multi-stage semiconductor demodulating circuit and output signals from the fast Fourier transformer (12₁) in the first circuit stage (10₁) of the first multi-stage semiconductor demodulating circuit are supplied to the signal-combining unit (13₂) in the second circuit stage (10₂) of the first multi-stage semiconductor demodulating device to be combined;
output signals from the fast Fourier transformer (12₃) in each of the third (10₃) to n-th circuit stages of the first multi-stage semiconductor demodulating device and the combined signals from the signal-combining unit (13₂) in the preceding circuit stage (10₂) of the first multi-stage semiconductor demodulating circuit are supplied to the signal-combining unit (13₃) in each of the third (10₃) to n-th circuit stages (10₃) of the first multi-stage semiconductor demodulating circuit to combined;
output signals from the fast Fourier transformer (14) in the second single-stage semiconductor demodulating circuit (11) and the combined signals from the signal-combining unit (13₃) in the n-th circuit stage (10₃) of the first multi-stage semiconductor demodulating circuit are supplied to the signal-combining unit (16) in the second single-stage semiconductor demodulating circuit (11) to be combined;
the combined signals from the signal-combining unit (16) in the second single-stage semiconductor demodulating circuit (11) are supplied to the forward error-correcting unit (15) in the second single-stage semiconductor demodulating circuit (11); and
bit strings are output from an output terminal of the forward error-correcting unit (15).

3. The OFDM diversity receiver according to claim 1 or 2, wherein the first multi-stage semiconductor demodulating circuit has three circuit stages (3₁ - 3₃; 10₁ - 10₃).

## Patentansprüche

1. Ein OFDM-Diversity-Empfänger mit:
einer ersten mehrstufigen Halbleiter-Demodulationsschaltung mit einer ersten bis n-ten Schaltungsstufe (3₁-3₃), wobei jede Schaltungsstufe einen Fast-Fourier-Transformierer (5₁-5₃), eine erste Signal-Kombinierungseinheit (7₁-7₃) und eine zweite Signal-Kombinierungseinheit (8₁-8₃) aufweist, und
einer zweiten einstufigen Halbleiter-Demodulationsschaltung (4) mit einem Fast-Fourier-Transformierer (6) und einer Vorwärtsfehlerkorrektureinheit (9), wobei
die erste mehrstufige Halbleiter-Demodulationsschaltung und die zweite einstufige Halbleiter-Demodulationsschaltung getrennte und individuelle Geräte sind;
Signale, die von Abstimmeinheiten (2₁-2₄) empfangen werden, dem jeweiligen Fast-Fourier-Transformierer (5₁-5₃, 6) in der ersten mehrstufigen Halbleiter-Demodulationsschaltung (3₁-3₃) und in der zweiten einstufigen Halbleiter-Demodulationsschaltung (4) zugeführt werden;
Ausgangssignale von dem Fast-Fourier-Transformierer (5₂) in der zweiten Schaltungsstufe (3₂) der ersten mehrstufigen Halbleiter-Demodulationsschaltung und Ausgangssignale des Fast-Fourier-Transformiers (5₁) in der ersten Schaltungsstufe (3₁) der ersten mehrstufigen Halbleiter-Demodulationsschaltung der ersten Signal-Kombinierungseinheit (7₂) in der zweiten Schaltungsstufe (3₂) der ersten mehrstufigen Halbleiter-Demodulationsschaltung zugeführt werden, um kombiniert zu werden;
Ausgangssignale aus dem Fast-Fourier-Transformierer (5₃) in jeder der dritten bis (n-1)-ten Schaltungsstufe (3₃) der ersten mehrstufigen Halbleiter-Demodulationsschaltung und die kombinierten Signale der Signal-Kombinierungseinheit in der vorangehenden Schaltungsstufe (3₂) der ersten mehrstufigen Halbleiter-Demodulationsschaltung der ersten Signal-Kombinierungseinheit (7₃) in jeder der dritten bis (n-1)-ten Schaltungsstufe (3₃) der ersten mehrstufigen Halbleiter-Demodulationsschaltung zugeführt werden, um kombiniert zu werden;
Ausgangssignale aus dem Fast-Fourier-Transformierer (5₃) in der n-ten Schaltungsstufe (3₃) der ersten mehrstufigen Halbleiter-Demodulationsschaltung und die kombinierten Signale von der Signal-Kombinierungseinheit (7₂) in der vorangehenden Schaltungsstufe (3₂) der ersten mehrstufigen Halbleiter-Demodulationsschaltung der ersten Signal-Kombinierungseinheit (7₃) in der n-ten Schaltungsstufe (3₃) der ersten mehrstufigen Halbleiter-Demodulationsschaltung zugeführt werden, um kombiniert zu werden;
die kombinierten Signale der n-ten Schaltungsstufe (3₃) der ersten mehrstufigen Halbleiter-Demodulationsschaltung und Ausgangssignale des Fast-Fourier-Transformierers (6) in der zweiten einstufigen Halbleiter-Demodulationsschaltung (4) der zweiten Signal-Kombinierungseinheit (8₃) in der n-ten Schaltungsstufe (3₃) zugeführt werden, um kombiniert zu werden;
die kombinierten Signale aus der zweiten Signalkombinierungseinheit (8₃) in der n-ten Schaltungsstufe (3₃) der ersten mehrstufigen Halbleiter-Demodulationsschaltung der Vorwärstfehler-Korrektureinheit (9) in der zweiten einstufigen Halbleiter-Demodulationsschaltung (4) zugeführt werden; und
an einem Ausgangsanschluss der Vorwärts-Fehlerkorrektureinheit (9) Bitfolgen ausgegeben werden.

2. OFDM-Diversity-Empfänger aufweisend:
eine erste mehrstufige Halbleiter-Demodulationsschaltung (10₁-10₃) mit einer ersten (10₁) bis n-ten (10₃) Schaltungsstufe, wobei jede Schaltungsstufe einen Fast-Fourier-Transformierer (12₁-12₄) und eine Signalkombinierungseinheit (13₁-13₃) aufweist; und
eine zweite einstufige Halbleiter-Demodulationsschaltung (11) mit einem Fast-Fourier-Transformierer (14), einer Vorwärstfehler-Korrektureinheit (15) und einer Signalkombinierungseinheit (16), wobei
die erste mehrstufige Halbleiter-Demodulationsschaltung und die zweite mehrstufige Halbleiter-Demodulationsschaltung getrennte und individuelle Geräte sind;
Signale, die von Abstimmeinheiten (2₁-2₄) empfangen werden, den jeweiligen Fast-Fourier-Transformierern (12₁-12₃, 14) in der ersten mehrstufigen Halbleiter-Demodulationsschaltung (10₁-10₃) und in der zweiten einstufigen Halbleiter-Demodulationsschaltung (11) zugeführt werden;
Ausgangssignale aus dem Fast-Fourier-Transformierer (12₂) in der zweiten Schaltungsstufe (10₃) der ersten mehrstufigen Halbleiter-Demodulationsschaltung und Ausgangssignale aus dem Fast-Fourier-Transformierer (12₁) in der ersten Schaltungsstufe (10₁) der ersten mehrstufigen Halbleiter-Demodulationsschaltung der Signal-Kombinierungseinheit (13₂) in der zweiten Schaltungsstufe (10₂) der ersten mehrstufigen Halbleiter-Demodulationsschaltung zugeführt werden, um kombiniert zu werden;
Ausgangssignale aus dem Fast-Fourier-Transformierer (12₃) in jeder der dritten (10₃) bis n-ten Schaltungsstufe der ersten mehrstufigen Halbleiter-Demodulationsschaltung und die kombinierten Signale von der Signalkombinierungseinheit (13₂) in der vorangehenden Schaltungsstufe (10₂) der ersten mehrstufigen Halbleiter-Demodulationsschaltung der Signal-Kombinierungseinheit (13₃) in jeder der dritten (10₃) bis n-ten Schaltungsstufe (10₃) der ersten mehrstufigen Halbleiter-Demodulationsschaltung zugeführt werden, um kombiniert zu werden;
Ausgangssignale aus dem ersten Fast-Fourier-Transformierer (14) in der zweiten einstufigen Halbleiter-Demodulationsschaltung (11) und die kombinierten Signale aus der Signal-Kombinierungseinheit (13₃) in der dritten Schaltungsstufe (10₃) der ersten mehrstufigen Halbleiter-Demodulationsschaltung der Signal-Kombinierungseinheit (16) in der zweiten einstufigen Halbleiter-Demodulationsschaltung (11) zugeführt werden, um kombiniert zu werden;
die kombinierten Signale aus der ersten Signal-Kombinierungseinheit (16) in der zweiten einstufigen Halbleiter-Demodulationsschaltung (11) der Vorwärtsfehler-Korrektureinheit (15) in der zweiten einstufigen Halbleiter-Demodulationsschaltung (11) zugeführt werden; und
aus einem Ausgangsanschluss der Vorwärts-Fehlerkorrektureinheit (15) Bitfolgen ausgegeben werden.

3. OFDM-Diversity-Empfänger nach Anspruch 1 oder 2, wobei die erste mehrstufige Halbleiter-Demodulationsschaltung drei Schaltungsstufen (3₁-3₃; 10₁-10₃) hat.

## Revendications

1. Récepteur de diversité OFDM comprenant :
un premier circuit de démodulation à semiconducteur et à plusieurs étages comprenant un premier à un n^{ème} étages de circuit (3₁ - 3₃), chaque étage de circuit comprenant un dispositif de transformée de Fourier rapide (5₁ - 5₃), une première unité de combinaison de signaux (7₁ - 7₃) et une deuxième unité de combinaison de signaux (8₁ - 8₃) ; et
un deuxième circuit de démodulation à semiconducteur et à un seul étage (4) comprenant un dispositif de transformée de Fourier rapide (6) et une unité de correction d'erreurs sans voie de retour (9), dans lequel :
le premier circuit de démodulation à semiconducteur et à un seul étage et le deuxième circuit de démodulation à semiconducteur et à un seul étage sont des dispositifs distincts et individuels ;
des signaux reçus par des unités de syntonisation (2₁ - 2₄) sont fournis aux dispositifs de transformée de Fourier rapide respectifs (5₁ - 5₃,6) dans le premier circuit de démodulation à semiconducteur et à plusieurs étages (3₁ - 3₃) et le deuxième circuit de démodulation à semiconducteur et à un seul étage (4) ;
des signaux de sortie du dispositif de transformée de Fourier rapide (5₂) du deuxième étage de circuit (3₂) du premier circuit de démodulation à semiconducteur et à plusieurs étages et des signaux de sortie du dispositif de transformée de Fourier rapide (5₁) du premier étage de circuit (3₁) du premier circuit de démodulation à semiconducteur et à plusieurs étages sont fournis à la première unité de combinaison de signaux (7₂) du deuxième étage de circuit (3₂) du premier circuit de démodulation à semiconducteur et à plusieurs étages pour être combinés ;
des signaux de sortie du dispositif de transformée de Fourier rapide (5₃) de chacun des troisième à (n-1)^{ème} étages de circuit (3₃) du premier circuit de démodulation à semiconducteur et à plusieurs étages et les signaux combinés de l'unité de combinaison de signaux du précédent étage de circuit (3₂) du premier circuit de démodulation à semiconducteur et à plusieurs étages sont fournis à la première unité de combinaison de signaux (7₃) de chacun des troisième à (n-1)^{ème} étages de circuit (3₃) du premier circuit de démodulation à semiconducteur et à plusieurs étages pour être combinés ;
des signaux de sortie du dispositif de transformée de Fourier rapide (5₃) du n^{ème} étage de circuit (3₃) du premier circuit de démodulation à semiconducteur et à plusieurs étages et les signaux combinés de l'unité de combinaison de signaux (7₂) du précédent étage de circuit (3₂) du premier circuit de démodulation à semiconducteur et à plusieurs étages sont fournis à la première unité de combinaison de signaux (7₃) du n^{ème} étage de circuit (3₃) du premier circuit de démodulation à semiconducteur et à plusieurs étages pour être combinés ;
les signaux combinés dans le n^{ème} étage de circuit (3₃) du premier circuit de démodulation à semiconducteur et à plusieurs étages et les signaux de sortie du dispositif de transformée de Fourier rapide (6) du deuxième circuit de démodulation à semiconducteur et à un seul étage (4) sont fournis à la deuxième unité de combinaison de signaux (8₃) du n^{ème} étage de circuit (3₃) pour être combinés ;
les signaux combinés de la deuxième unité de combinaison de signaux (8₃) du n^{ème} étage de circuit (3₃) du premier circuit de démodulation à semiconducteur et à plusieurs étages sont fournis à l'unité de correction d'erreurs sans voie de retour (9) du deuxième circuit de démodulation à semiconducteur et à un seul étage (4) ; et
des chaînes binaires sortent d'une borne de sortie de l'unité de correction d'erreurs sans voie de retour (9).

2. Récepteur de diversité OFDM comprenant :
un premier circuit de démodulation à semiconducteur et à plusieurs étages (10₁ - 10₃) comprenant un premier (10₁) à un n^{ème} (10₃) étages de circuit, chaque étage de circuit comprenant un dispositif de transformée de Fourier rapide (12₁ - 12₄) et une unité de combinaison de signaux (13₁ - 13₃) ; et
un deuxième circuit de démodulation à semiconducteur et à un seul étage (11) comprenant un dispositif de transformée de Fourier rapide (14), une unité de correction d'erreurs sans voie de retour (15) et une unité de combinaison de signaux (16), dans lequel :
le premier circuit de démodulation à semiconducteur et à plusieurs étages et le deuxième circuit de démodulation à semiconducteur et à un seul étage sont des dispositifs distincts et individuels ;
des signaux reçus par des unités de syntonisation (2₁ - 2₄) sont fournis aux dispositifs de transformée de Fourier rapide respectifs (12₁ - 12₃, 14) dans le premier circuit de démodulation à semiconducteur et à plusieurs étages (10₁ - 10₃) et le deuxième circuit de démodulation à semiconducteur et à un seul étage (11) ;
des signaux de sortie du dispositif de transformée de Fourier rapide (12₂) du deuxième étage de circuit (10₂) du premier circuit de démodulation à semiconducteur et à plusieurs étages et des signaux de sortie du dispositif de transformée de Fourier rapide (12₁) du premier étage de circuit (10₁) du premier circuit de démodulation à semiconducteur et à plusieurs étages sont fournis à l'unité de combinaison de signaux (13₂) du deuxième étage de circuit (10₂) du premier circuit de démodulation à semiconducteur et à plusieurs étages pour être combinés ;
des signaux de sortie du dispositif de transformée de Fourier rapide (12₃) de chacun des troisième (10₃) à n^{ème} étages de circuit du premier circuit de démodulation à semiconducteur et à plusieurs étages et les signaux combinés de l'unité de combinaison de signaux (13₂) du précédent étage de circuit (10₂) du premier circuit de démodulation à semiconducteur et à plusieurs étages sont fournis à l'unité de combinaison de signaux (13₃) de chacun des troisième (10₃) à n^{ème} étages de circuit (10₃) du premier circuit de démodulation à semiconducteur et à plusieurs étages pour être combinés ;
des signaux de sortie du dispositif de transformée de Fourier rapide (14) du deuxième circuit de démodulation à semiconducteur et à un seul étage (11) et les signaux combinés de l'unité de combinaison de signaux (13₃) du n^{ème} étage de circuit (10₃) du premier circuit de démodulation à semiconducteur et à plusieurs étages sont fournis à l'unité de combinaison de signaux (16) du deuxième circuit de démodulation à semiconducteur et à un seul étage (11) pour être combinés ;
les signaux combinés provenant de l'unité de combinaison de signaux (16) du deuxième circuit de démodulation à semiconducteur et à un seul étage (11) sont fournis à l'unité de correction d'erreurs sans voie de retour (15) du deuxième circuit de démodulation à semiconducteur et à un seul étage (11) ; et
des chaînes binaires sortent d'une borne de sortie de l'unité de correction d'erreurs sans voie de retour (15).

3. Récepteur de diversité OFDM selon la revendication 1 ou 2, dans lequel le premier circuit de démodulation à semiconducteur et à plusieurs étages comporte trois étages de circuit (3₁ - 3₃ ; 10₁ - 10₃).
